# EUROPÄISCHE PATENTSCHRIFT

(11) **EP 2 985 138 B1**
(45) Veröffentlichungstag und Bekanntmachung des Hinweises auf die Patenterteilung: **28.11.2018**
(21) Anmeldenummer: 15002349.7
(22) Anmeldetag: 06.08.2015
(51) Int. Cl.: B29D 99/00, F03D 1/06, B29L 31/08

(54) **ROTORBLATT FÜR EINE WINDKRAFTANLAGE UND VERFAHREN ZUR HERSTELLUNG DES ROTORBLATTES**
ROTOR BLADE FOR A WIND TURBINE AND METHOD FOR PRODUCING THE ROTOR BLADE
PALE POUR UNE ÉOLIENNE ET PROCÉDÉ DE FABRICATION DE CELLE-CI

(30) Priorität: 10.08.2014 DE 102014011557
(43) Veröffentlichungstag der Anmeldung: 17.02.2016
(73) Patentinhaber: Prass, Gregor, 22455 Hamburg (DE); Hoyer, Nicolas, 21629 Neu Wulmstorf (DE)
(72) Erfinder: Borrmann, Rasmus, 20359 Hamburg (DE); Hoyer, Nicolas, 22761 Hamburg (DE)

(56) Entgegenhaltungen:
- EP-A1- 2 402 594
- WO-A1-2013/102462
- WO-A1-2014/165321
- FR-A1- 2 963 066
- US-A1- 2011 142 670
- US-A1- 2011 142 679
- US-B1- 6 638 466
- E Zürcher ET AL: "Fällzeitpunkt und Holzeigenschaften : mondbezogene Variationen im Verhältnis zu Wasser", , 1. Februar 2009 (2009-02-01), Seiten 15-26, XP055233487, Gefunden im Internet: URL:http://www.wsl.ch/info/mitarbeitende/c onedera/publications1/download/Zuercher_et _al_2009 [gefunden am 2015-12-03]

## Beschreibung

Die Erfindung betrifft ein Rotorblatt für eine Windkraftanlage mit einem Körper in Form eines Hohlkörpers, wobei der Hohlkörper eine Wandung als eine Druckseite und eine Wandung als eine Saugseite aufweist, die sich zwischen einer Vorderkante des Rotorblattes und einer Hinterkante des Rotorblattes erstrecken, mit wenigstens einem Scherelement, das sich zwischen der Druck- und der Saugseite erstreckt, wobei die Wandungen aus Wandelementen aus einem Holzwerkstoff gebildet sind, und ein Verfahren zum Herstellen eines Rotorblattes für eine Windkraftanlage.

Windkraft wird als eine der saubersten, umweltfreundlichsten Energiequellen angesehen, die momentan verfügbar sind. Eine moderne Windkraftanlage weist üblicherweise einen Turm, einen Generator, ein Getriebegehäuse, eine Gondel und ein oder mehrere Rotorblätter auf. Die Rotorblätter fangen kinetische Energie des Winds unter Verwendung bekannter Tragflächenprinzipien ein und übertragen die kinetische Energie durch Rotationsenergie zum Drehen einer Welle, die die Rotorblätter verbindet, auf ein Getriebegehäuse oder, falls keine Getriebegehäuse verwendet wird, direkt auf einen Generator. Der Generator wandelt dann die mechanische Energie in elektrische Energie, die in ein Versorgungsnetz eingespeist werden kann. Rotorblätter sind als zentrale Komponente maßgebend für die Leistungscharakteristik der Windenergieanlage.

Heutige Rotorblätter werden in Halbschalen-Bauweise aus glasfaserverstärkten Kunststoffen (GFK) gefertigt. Dabei ist es allgemein erforderlich, dass spezielle Werkzeuge und/oder Formen verwendet werden. Zum Beispiel werden die Blatthälften eines herkömmlichen Rotorblatts üblicherweise in großen Formen ausgebildet, die individuell für die bestimmte Größe oder Gestalt des Rotorblatts gefertigt sind, das produziert wird. Entsprechend müssen neue Formen bezogen werden oder auf andere Weise für jede Rotorblattgröße und -gestalt hergestellt werden, die produziert wird, was die Produktionskosten von Rotorblättern enorm erhöht. Zusätzlich umfassen herkömmliche Verfahren zum Herstellen der Blatthälften eines Rotorblatts üblicherweise die Verwendung eines Einlegeprozesses, bei dem Lagen eines Verstärkungsmaterials in die individuell gefertigten Formen von Hand eingelegt werden. Dieser Prozess ist sehr arbeitsintensiv und erhöht enorm die Zeit, die zum Produzieren eines Rotorblatts erforderlich ist. (siehe auch Fachartikel "Balsa - Naturprodukt in Windenergie-anlagen von Roma Gätzi, Holzforschung Schweiz 2009/2, Seiten 20 bis 23) Weiterhin ist das Anpassen der Form des Rotorblatts nicht ohne weiteres möglich, da hier im Normalfall eine neue Form erstellt werden muss. Rotorblätter des Weiteren sind in ihrer Betriebsdauer höchsten dynamischen Lasten ausgesetzt. Darüber hinaus müssen diese nicht nur der Extremwertlast standhalten, sondern zusätzlich über eine ausreichende Betriebsfestigkeit verfügen. Mit steigender Rotorlänge nimmt dem entsprechend auch die Wandstärke überproportional zu.

Um die Leistung einer Windenergieanlage zu erhöhen und auch windschwache Standorte wirtschaftlich erschließen zu können, geht die Entwicklung moderner Rotorblätter hin zu größeren Blattlängen. Daraus ergeben sich überproportional höhere Belastungen der Flügel, wobei insbesondere die dynamisch-mechanischen Lasten kritische Parameter sind. Die Bauweise mit glasfaserverstärkten Kunststoffen stößt bei großen Blattlängen an ihre strukturellen Grenzen. Darüber hinaus ist die Frage des Recyclings von GFK-Bauteilen weitestgehend ungeklärt, zudem ist die Reparatur von Glasfaser-Rotorblättern problematisch.

Aufgabe der Erfindung ist es, ein Rotorblatt und ein Verfahren zu dessen Herstellung bereitzustellen, mit dem große Rotorblattlängen möglich sind und die zuvor beschriebenen Nachteile überwunden werden.

Erfindungsgemäß erfolgt die Lösung der Aufgabe hinsichtlich des Rotorblattes dadurch, dass in der Außenseite in wenigstens einer der Wandungen wenigstens eine Vertiefung angeordnet ist, in der ein Versteifungselement angeordnet ist, dass sich in Richtung der Spannweite des Körper erstreckt, wobei es sich bei dem Versteifungselement bevorzugt um einen Gurt handelt, der besonders bevorzugt ein Kohlefaserverbundmaterial aufweist und/oder besonders bevorzugt in die Vertiefung eingeklebt ist..

Rotorblätter aus Vollholz für Kleinwindanlagen sind seit langer Zeit bekannt. Die Erfahrung hat gezeigt, dass diese insbesondere ein Problem mit Fäulnis haben. Für größere Rotorradien ist diese Bauweise jedoch aus Gewichtsgründen ungeeignet. Aufgrund der Fäulnisproblematik wurde bei Rotoren für Windkraftanlagen Versuche mit Rotorblättern in Holz-Epoxid-Bauweise unternommen. Dabei wurde das Holz vollständig in Harz eingebettet, weswegen eine solche Materialkombination ein Faserverbundwerkstoff darstellt. Durch die Holz-Epoxid-Bauweise wurde eine gute Ermüdungsfestigkeit bei gleichzeitiger Verhinderung von Fäule erreicht. Da aber Glasfaserverbundwerkstoffe eine höhere spezifische Festigkeit als Holzverbundwerkstoffe aufweisen und deren Materialeigenschaften besser zu berechnen und zu reproduzieren sind, haben sich diese durchgesetzt. Weiterhin wird Holz als Füllmaterial für Hohlräume bzw. als Kernmaterial in Form von Balsaholz verwendet (siehe u.a. Fachartikel "Balsa - Naturprodukt in Windenergie-anlagen von Roma Gätzi, Holzforschung Schweiz 2009/2, Seiten 20 bis 23). Hier dient es der Formgebung. Weiterhin wurde es als Lagen in Negativformen beim Bau von Rotorblättern in Verbindung mit glasfaserverstärktem Kunststoff und Harz verwendet. Hier tritt das auch aus dem Bootsbau von Segelbooten und Segelyachten bekannte Problem der Osmose auf. Die Verwendung von Holz beim Bau von rotorblättern für moderne Windkraftanlagen ist mit großen Vorurteilen belastet.

Überraschender Weise hat sich entgegen den bisherigen Erfahrungen aber gezeigt, dass es möglich ist, mit einem Hohlkörperrotorblatt mit Wandungen aus Wandelementen aus einem Holzwerkstoff moderne Rotorblätter für Windkraftanlagen zu fertigen, mit denen es möglich ist, den Anforderungen, die die größer werdenden Radien an die Rotorblätter stellen, zu genügen und dies besser zu erfüllen als es mit glasfaserverstärkten Kunststoffen möglich ist. Weiterhin lässt sich ein Holzwerkstoff besser recyceln und auch besser reparieren als ein GFK-Werkstoff. Eine Möglichkeit der Ausführung bzw. des Erstellens hierzu ist in FR 2963066 A1 gezeigt.

Durch die Verwendung von Vertiefungen wird es auf besonders einfache Weise möglich, die Gurte in das Rotorblatt zu integrieren. Durch den Einsatz von Kohlefaserverbundmaterial wird es auf einfache Weise möglich, die integrale Festigkeit und Steifigkeit zu erhöhen.

Eine vorteilhafte Lehre der Erfindung sieht vor, dass es sich bei dem Holzwerkstoff um Vollholz, Brettsperrholz oder Furniersperrholz handelt, wobei bevorzugt Buchenfurniersperrholz. Diese Holzwerkstoffe haben sich überraschender Weise als besonders vorteilhaft erwiesen.

Eine Lehre der Erfindung sieht vor, dass die Wandelemente wenigstens teilweise miteinander verklebt sind. Dieses stellt eine besonders einfache und vorteilhafte Befestigungsmöglichkeit dar, da hierdurch u. A. eine stoffschlüssige Verbindung der einzelnen Wandelemente miteinander erreicht wird.

Eine Lehre der Erfindung sieht vor, dass die Außenseite der Wandung mit einer Beschichtung versehen ist. hierdurch wird es auf bsonders einfache Weise möglich, die Rotorblätter vor Umwelteinflüssen zu schützen.

Eine Lehre der Erfindung sieht vor, dass das Scherelement als Steg ausgeführt ist, der sich bevorzugt zwischen Vorderkante und Hinterkante erstreckt und/oder der sich zwischen den Wandungen, bevorzugt in Richtung der Spannweite des Körpers, erstreckt.

Eine Lehre der Erfindung sieht vor, dass wenigstens eine Teil der Wandelemente als brettartige Elemente ausgeführt sind, die an ihrer Breitseite miteinerander verbunden sind. Eine Lehre der Erfindung sieht vor, dass die Hinterkante des Rotorblattes aus plattenförmigen Wandelementen gebildet ist, die bevorzugt an ihrer Schmalseite miteinander verbunden sind.

Eine Lehre der Erfindung sieht vor, dass die Wandelemente vor dem Zusammenbau vorkontouriert sind. Hierdurch wird die Weiterverarbeitung vereinfacht.

Erfindungsgemäß erfolgt die Lösung der Aufgabe hinsichtlich des Verfahrens durch ein Verfahren zum Herstellen eines Rotorblattes für eine Windkraftanlage, insbesondere eines zuvor beschriebenen erfindungsgemäßen Rottorblattes, bei dem aus Wandelementen aus einem Holzwerkstoff ein Flügelrohling hergestellt wird, eine äußere Oberfläche des Flügelrohlings mittels Oberflächenbearbeitung in die Rotorblattform gebracht wird, und die Oberfläche des Rotorblattes beschichtet wird.

Überraschender Weise hat sich gezeigt, dass es mit diesem Verfahren möglich ist, deutlich günstiger Rotorblätter für moderne Windkraftanlagen zu fertigen.

Eine Lehre der Erfindung sieht vor, dass die Wandelemente vorkonturiert werden und/oder mit einem Klebstoff und/oder mittels Keilzinken und/oder Schäften zu dem Flügelrohling verbunden werden. Hierdurch lassen sich die Elemente auf besonders einfache Weise miteinander verbinden.

Eine Lehre der Erfindung sieht vor, dass die Oberflächenbearbeitung spanabhebend erfolgt, bevorzugt durch Fräsen und/oder Schleifen, besonders bevorzugt CNC-basiert. Hierbei handelt es sich um ein besonders einfaches und kostengünstiges Herstellungsverfahren.

Eine Lehre der Erfindung sieht vor, dass in die Oberfläche des Flügels beim Bearbeiten des Flügelrohlings eine Vertiefung eingebracht wird, in die in einem weiteren Verfahrensschritt ein Gurt eingebracht, bevorzugt verklebt, wird.

Eine Lehre der Erfindung sieht vor, dass als Beschichtung die Oberfläche lackiert wird und/oder eine Folie aufgebracht wird.

Als Bemessungsgrundlage wird von einer Hohlkörper-Bauweise ausgegangen. Die Wandstärke variiert vereinfachend ausschließlich entlang der Blattlänge.

Nachfolgend wird die Erfindung anhand eines bevorzugten Ausführungsbeispiels in Verbindung mit einer Zeichnung näher erläutert. Dabei zeigen:
- Fig. 1: eine schematische räumliche Ansicht einer Windkraftanlage,
- Fig. 2: eine schematische räumliche Ansicht eines Rotorflügels,
- Fig. 3: eine schematische räumliche Schnittansicht zu Fig. 2, und
- Fig. 4a bis Fig. 8: Schnittansichten verschiedener erfindungsgemäßer Ausführungsformen.

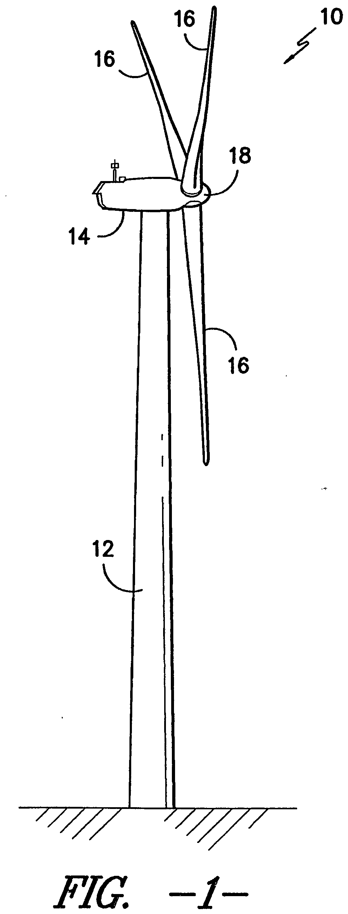

Fig. 1 stellt eine perspektivische Ansicht einer Windkraftanlage 10 dar. Die Windkraftanlage 10 umfasst einen Turm 12 mit einer daran angebrachten Gondel 14. Eine Mehrzahl von Rotorblättern 16 ist an einer Rotornabe 18 angebracht, wiederum mit einem Hauptflansch verbunden ist, der eine Hauptrotorwelle dreht. Die Windkraftanlagenenergieerzeugung und die Steuerungsbauteile sind innerhalb der Gondel 14 untergebracht. Die Windkraftanlage 10 der Fig. 1 ist lediglich zu Darstellungszwecken angegeben, um die vorliegende Erfindung in ein beispielhaftes Gebiet der Verwendung einzuordnen. Die Erfindung ist nicht auf irgendeine bestimmte Art an Windkraftanlagenkonfiguration beschränkt.

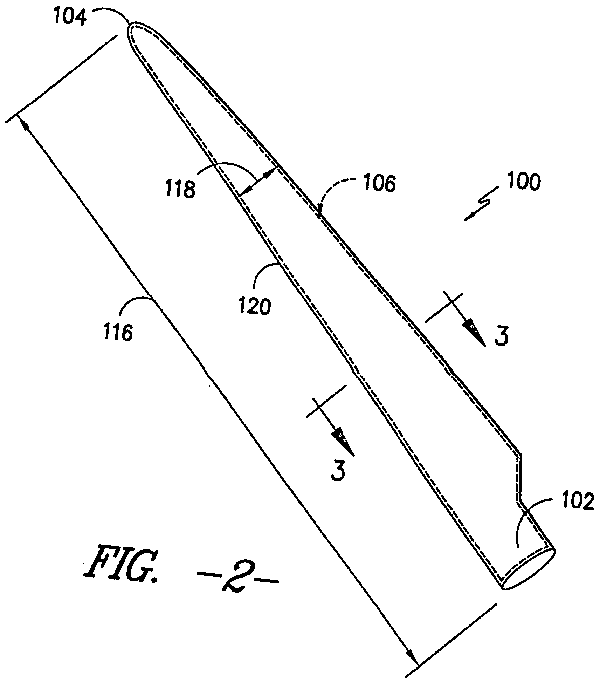

Unter Bezugnahme auf Fig. 2 wird eine Ausführungsform eines Rotorblatts 100 dargestellt. Fig. 2 stellt eine perspektivische Ansicht des Rotorblatts 100 dar. Wie gezeigt, umfasst das Rotorblatt 100 eine Blattwurzel 102, die zum Montieren des Rotorblatts 100 an die Nabe 18 einer Windkraftanlage 10 (Fig. 1) eingerichtet ist, und eine Blattspitze 104, die der Blattwurzel 102 gegenüberliegend angeordnet ist. Ein Körper 106 des Rotorblatts 100 kann sich zwischen der Blattwurzel 102 und der Blattspitze 104 erstrecken und kann allgemein die aerodynamische Form des Rotorblatts 100 definieren. Zum Beispiel wird bei einigen Ausführungsformen der Körper 106 hergestellt, dass er einen tragflächenförmigen Querschnitt definiert, wie beispielsweise durch Ausbilden als symmetrische oder gewölbte Tragflächenform. Somit kann der Körper 106 eine Druckseite 108 und eine Saugseite 110 umfassen, die sich zwischen einer Vorderkante 112 und einer Hinterkante 114 erstrecken. Zusätzlich kann der Körper 106 allgemein eine Spannweite 116, die die gesamte Länge zwischen der Blattwurzel 102 und der Blattspitze 104 definiert, und eine Profilsehne 118, die die gesamte Länge zwischen der Vorderkante 112 und der Hinterkante 114 definiert, umfassen. Wie allgemein verständlich ist, kann die Profilsehne 118 in Länge in Bezug auf die Spannweite 116 variieren, da sich der Körper 106 von der Blattwurzel 102 zu der Blattspitze 104 erstreckt.

Der Körper 106 des Rotorblatts 100 kann auch zusätzliche aerodynamische Merkmale haben. Zum Beispiel kann bei einer Ausführungsform der Körper 106 aeroelastisch zugeschnitten sein, wie beispielsweise durch Biegen und/oder Verdrehen in allgemein einer Richtung der Profilsehne (d. h. in einer Richtung allgemein parallel zu der Profilsehne 118) und/oder in allgemein einer Richtung der Spannweite (d.h. in einer Richtung allgemein parallel zu der Spannweite 116). Außerdem kann das Rotorblatt 100 allgemein ein Oberflächenschutz 120 beispielsweise in Form einer Beschichtung, einer Außenhaut, oder einer Lackierung, umfassen, die den aerodynamisch geformten Körper umgibt.

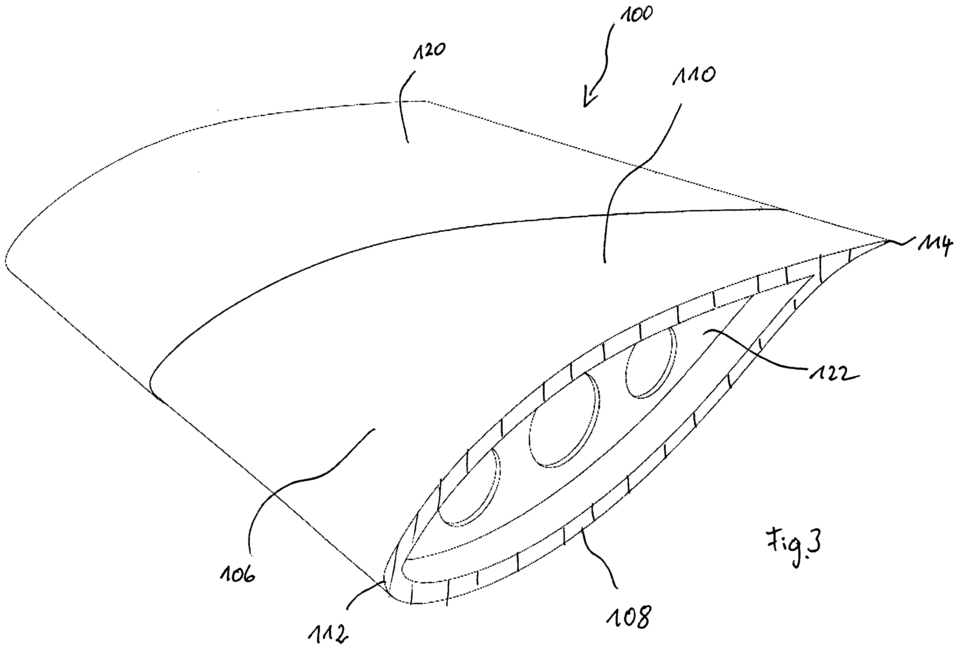

Fig. 3 zeigt eine Schnittansicht zum Flügel 100. Der Körper 106 ist dabei als Hohlkörper ausgeführt. In Richtung der Profilsehen 118 sind Stege 122 angeordnet.

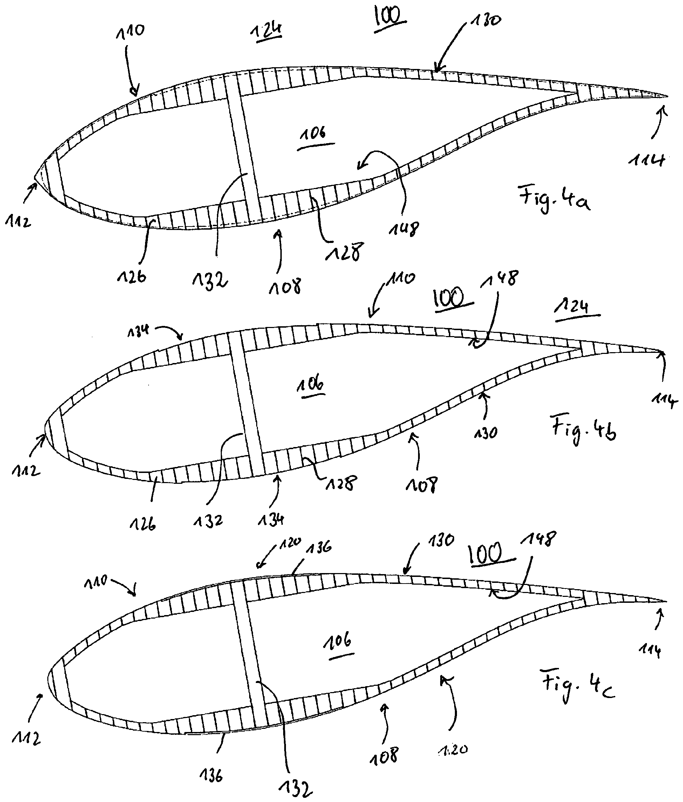

Fig. 4a bis 4c zeigen den Aufbau und die Herstellung einer ersten Ausführungsform eines Erfindungsgemäßen Rotorblattes 100. Dabei wird aus Wandelementen 126 eine Rohling 124 hergestellt, so dass der Körper 106 als Hohlkörper vorliegt. Die Wandelemente 126 sind brettartige bzw. kantholzartige Elemente, die mit ihrer längsten Erstreckung in Richtung der Spannweite 116 angeordnet sind und miteinander an einer Querseite 128 verklebt sind. In Fig. 4a ist die Kontur 130 des fertig bearbeiteten Rotorblattes 100 eingezeichnet. Die Wandelemente 126 sind vorbereitet in Abhängigkeit wo im Körper 106 sie angeordnet werden, so dass der Rohling 124 bereits eine erste Rohform des Rotorblattes darstellt. Beispielhaft ist in Fig. 4a ein Wandelement 126 als ein Steg 132 ausgeführt. Der Steg 132 erstreckt sich dabei in Spannweite 116 des Rotorblattes 100.

Nach dem Verkleben wird der Rohling 124 oberflächenbearbeitet, wie dieses als fertig oberflächenbearbeiteter Rohling 124 in Fig. 4b dargestellt ist. Mittels CNC-Fräsen und anschließendem Schleifen wird die fertige Kontur 130 bzw. Oberflächenform des Rotorblattes erstellt. Das Fräsen bzw. die Oberflächenbehandlung erfolgt dabei entweder in Bezug auf den Rohling 124 des gesamten Rotorblatts 100 oder eine Teilabschnitts des Rotorblattes 100.

In die Oberfläche 130 ist eine Vertiefung 134 eingearbeitet, in die ein Gurt 136 bzw. Holm eingebracht wird (Siehe Fig. 4c). Die Vertiefung erstreckt sich in Richtung der Spannweite 116. Je nach Auslegung des Rotorblattes können auch mehrere, ggf. schmalere Vertiefungen 134 vorgesehen sein. Das Einbringen des Gurtes 136 in die Vertiefung 134 erfolgt mit einem geeigneten Befestigungsmittel, beispielsweise Klebstoff. Der Gurt 136 besteht bevorzugt aus einem Kohlefaserverbundmaterial.

Nach Einbringen des Gurtes 136 in die Vertiefung 134 wird ein Oberflächenschutz 120 auf die Oberfläche 130 des Körpers 106 aufgebracht, wodurch beispielsweise ein Verwitterungsschutz erzeugt wird. Beispielsweise wird der Oberflächenschutz 120 durch das Aufbringen einer Lackierung erzeugt.

Die Wandelemente 126 bestehen beispielsweise aus Vollholz, Brettsperrholz, Furniersperrholz, beispielsweise Buchenfurnier, oder einem anderen Holzverbundwerkstoff.

Eine Oberflächenbearbeitung kann mit gleicher Güte wie die der Oberfläche 130 erfolgen, dieses ist aber nicht zwingend notwendig. Die durch die Wandelemente 126 beim Zusammenbau des Rohlings 124 Güte der Innenseite 148 ist meistens ausreichend.

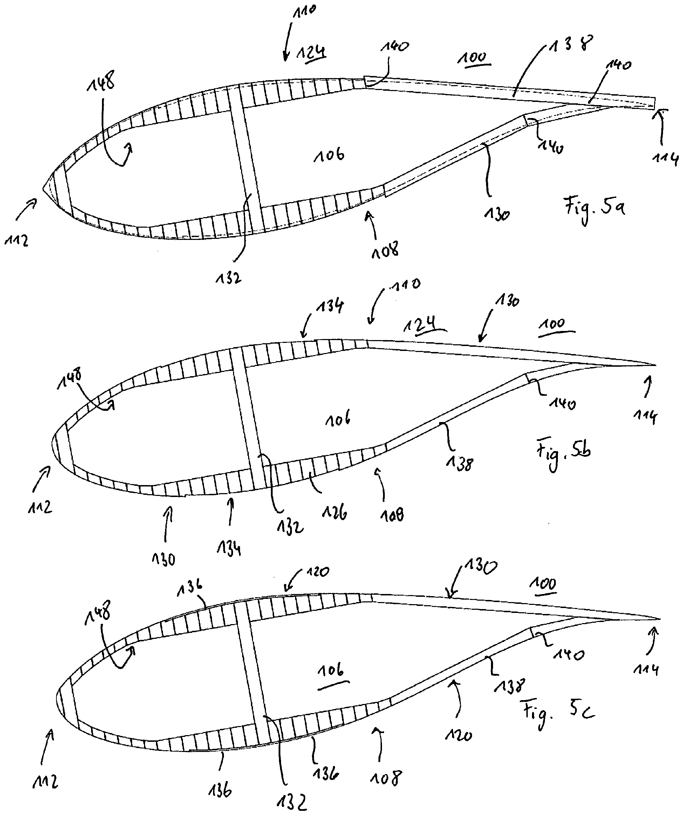

Fig. 5a bis Fig. 5c zeigen den Aufbau und die Herstellung einer weiteren Ausführungsform eines Erfindungsgemäßen Rotorblattes 100. Dabei wird aus Wandelementen 126 eine Rohling 124 hergestellt, so dass der Körper 106 als Hohlkörper vorliegt. Der dünner und damit flexibler ausgeführte Hinterteil bis zur Hinterkante 114 des Rotorblattes 100 ist dabei nicht wie in Fig. 4a bis 4c dargestellt, aus kürzeren Wandelementen 126 erzeugt, sondern es sind Plattenelemente 138 angeordnet, die an ihren Schmalseiten 140 miteinander und mit den übrigen Wandelementen 126 verbunden, bevorzugt verklebt, sind. Der übrige Aufbau bzw. die Übrige Herstellung erfolgt wie zuvor beschreiben.

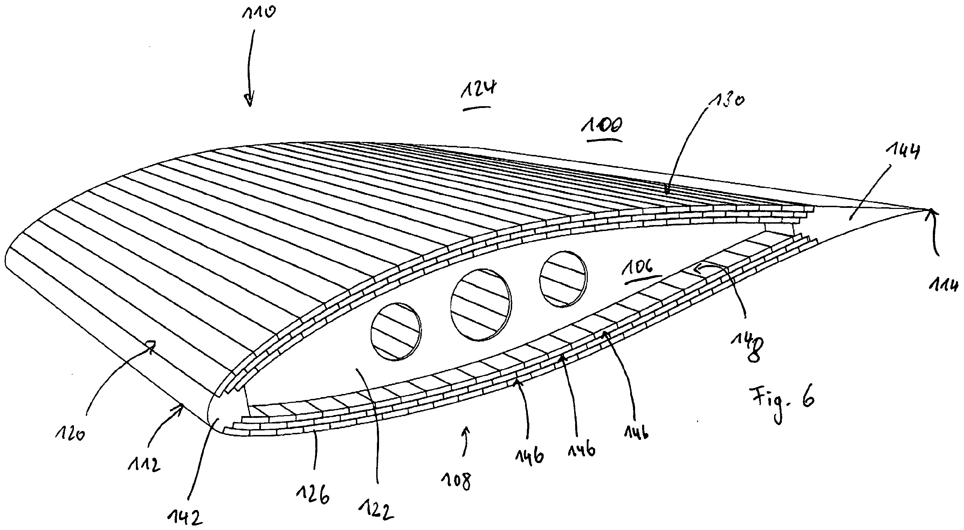

Fig. 6 zeigt den Aufbau einer weiteren Ausführungsform eines Erfindungsgemäßen Rotorblattes 100. Hierbei sind Vorderkante 112 und die Hinterkante 114 mit einem speziellen Bauteil 142, 144 gebildet, die mit wenigstens einem Steg 122 verbunden sind. Hierauf werden Wandelemente 126 plankenartig aufgelegt und miteinander verbunden. Dieses kann, wie hier dargestellt in mehreren übereinander angeordneten Reihen 146 erfolgen. Auch hier erfolgt eine Oberflächenbearbeitung, ggf. mit dem Erstellen von Vertiefungen 134 und das Aufbringen von Gurten 136, sowie das Aufbringen eines Oberflächenschutzes 120 wie zuvor beschrieben. Je nach Auslegung des Rotorblattes 100 können die Stege 122 tragender Bestandteil des Rotorblattes 100 sein oder lediglich zur Anordnung der Wandelemente 126 dienen.

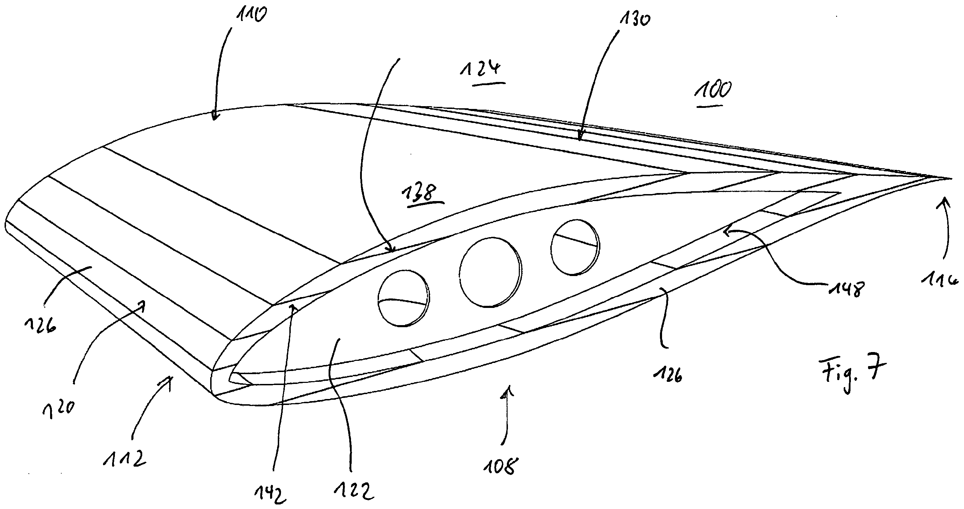

Fig. 7 zeigt den Aufbau einer weiteren Ausführungsform eines Erfindungsgemäßen Rotorblattes 100. Hierbei sind plattenartige Wandelemente 138 in Kombination mit Wandelementen 126 miteinander verbunden. Das Verbinden erfolgt dabei entlang der Schmalseiten 142 sowie auch der Längsseiten 150 der Plattenelemente 138. Auch hier erfolgt eine Oberflächenbearbeitung, ggf. mit dem Erstellen von Vertiefungen 134 und das Aufbringen von Gurten 136, sowie das Aufbringen eines Oberflächenschutzes 120 wie zuvor beschrieben. Je nach Auslegung des Rotorblattes 100 können die Stege 122 tragender Bestandteil des Rotorblattes 100 sein oder lediglich zur Anordnung der Wandelemente 126 dienen.

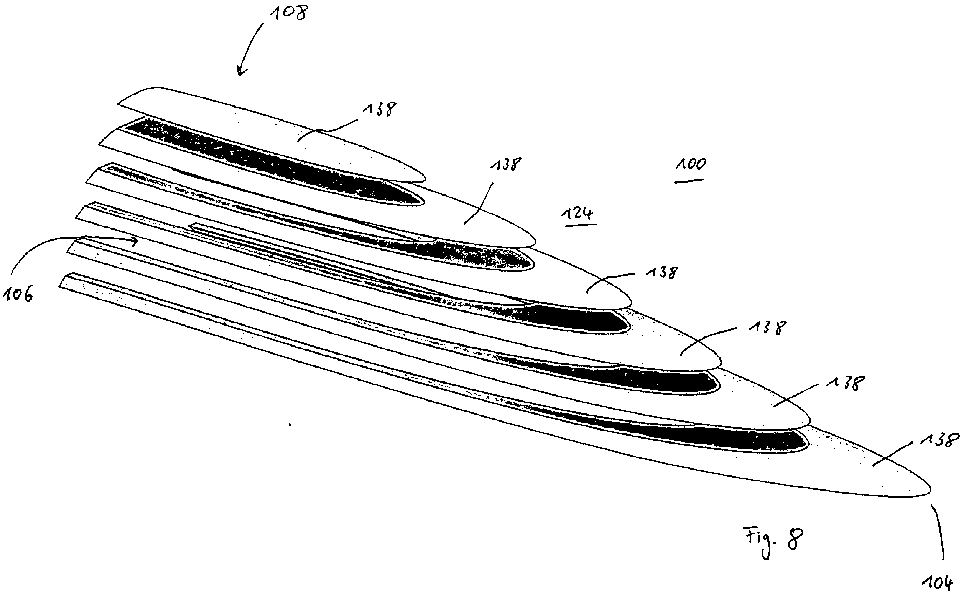

Fig. 8 zeigt den Aufbau einer weiteren Ausführungsform eines Erfindungsgemäßen Rotorblattes 100. Hierbei sind plattenartige Wandelemente 138 vorgesehen, deren Rohform aus einzelnen Platten vor dem Zusammenfügen zu einem Rohling 124 bereits mittels Fräsen hergestellt wurde, so dass nach dem Verbinden beispielsweise durch verkleben, lediglich eine Feinbearbeitung beispielsweise durch Schleifen erfolgt. Vertiefungen 134 werden hierbei bereits vor dem Zusammenfügen erstellt. Auch hier erfolgt en Aufbringen von Gurten 136, sowie das Aufbringen eines Oberflächenschutzes 120 wie zuvor beschrieben.

## Patentansprüche

1. Rotorblatt für eine Windkraftanlage (10) mit einem Körper (106) in Form eines Hohlkörpers, wobei der Hohlkörper (106) eine Wandung als eine Druckseite (108) und eine Wandung als eine Saugseite (110) aufweist, die sich zwischen einer Vorderkante (112) des Rotorblattes (100) und einer Hinterkante (114) des Rotorblattes (100) erstrecken, mit wenigstens einem Scherelement (132), das sich zwischen der Druck- und der Saugseite erstreckt, wobei die Wandungen aus Wandelementen (126,138) aus einem Holzwerkstoff gebildet sind, **dadurch gekennzeichnet, dass** in der Außenseite in wenigstens einer der Wandungen wenigstens eine Vertiefung (134) angeordnet ist, in der ein Versteifungselement (136) angeordnet ist, dass sich in Richtung der Spannweite (116) des Körper (106) erstreckt.

2. Rotorblatt nach Anspruch 1, **dadurch gekennzeichnet, dass** es sich bei dem Holzwerkstoff um Vollholz, Brettsperrholz oder Furniersperrholz handelt.

3. Rotorblatt nach Anspruch 1 oder 2, **dadurch gekennzeichnet, dass** die Wandelemente (126) wenigstens teilweise miteinander verklebt sind.

4. Rotorblatt nach einem der Ansprüche 1 bis 3, **dadurch gekennzeichnet, dass** es sich bei dem Versteifungselement (136) um einen Gurt handelt.

5. Rotorblatt nach Anspruch 4, **dadurch gekennzeichnet, dass** der Gurt ein Kohlefaserverbundmaterial aufweist, und/oder dass der Gurt in die Vertiefung (134) eingeklebt ist.

6. Rotorblatt nach einem der Ansprüche 1 bis 5, **dadurch gekennzeichnet dass** die Außenseite der Wandung mit einer Beschichtung (120) versehen ist.

7. Rotorblatt nach einem der Ansprüche 1 bis 6, **dadurch gekennzeichnet, dass** das Scherelement als Steg (122, 132) ausgeführt ist, der sich zwischen Vorderkante (112) und Hinterkante (114) erstreckt und/oder der sich zwischen den Wandungen in Richtung der Spannweite (116) des Körper (106), erstreckt.

8. Rotorblatt nach einem der Ansprüche 1 bis 7, **dadurch gekennzeichnet, dass** wenigstens eine Teil der Wandelemente (126, 138) als brettartige Elemente ausgeführt sind, die an ihrer Breitseite miteinerander verbunden sind.

9. Rotorblatt nach einem der Ansprüche 1 bis 8, **dadurch gekennzeichnet, dass** die Hinterkante (114) des Rotorblattes aus plattenförmigen Wandelementen (138) gebildet ist.

10. Rotorblatt nach Anspruch 9, **dadurch gekennzeichnet, dass** die plattenförmigen Wandelemente (138) an ihrer Schmalseite (140) miteinander verbunden sind.

11. Rotorblatt nach einem der Ansprüche 1 bis 10, **dadurch gekennzeichnet, dass** die Wandelemente (126, 138) vor dem Zusammenbau vorkontouriert sind.

12. Verfahren zum Herstellen eines Rotorblattes für eine Windkraftanlage bei dem aus Wandelementen (126, 138) aus einem Holzwerkstoff ein Flügelrohling (124) hergestellt wird, eine äußere Oberfläche (130) des Flügelrohlings (124) mittels Oberflächenbearbeitung in die Rotorblattform gebracht wird, und die Oberfläche (130) des Rotorblattes (100) beschichtet wird, wobei in die Oberfläche (130) des Rotorblattes (100) beim Bearbeiten des Flügelrohlings (124) eine Vertiefung (134) eingebracht wird, in die in einem weiteren Verfahrensschritt ein Gurt (136) eingebracht wird.

13. Verfahren nach Anspruch 12, **dadurch gekennzeichnet, dass** die Wandelemente (126, 138) vorkonturiert werden und/oder mit einem Klebstoff und/oder mittels Keilzinken und/oder Schäften zu dem Flügelrohling (124) verbunden werden.

14. Verfahren nach Anspruch 12 oder 13, **dadurch gekennzeichnet, dass** die Oberflächenbearbeitung spanabhebend erfolgt, und/oder dass der Gurt in die Vertiefung verklebt wird..

15. Verfahren nach einem der Ansprüche 12 bis 14, **dadurch gekennzeichnet, dass** als Beschichtung (120) die Oberfläche (130) lackiert wird und/oder eine Folie aufgebracht wird.

## Claims

1. Rotor blade for a wind turbine (10) comprising a body (106) in the form of a hollow body, the hollow body (106) having one wall as a pressure side (108) and one wall as a suction side (110), which extend between a leading edge (112) of the rotor blade (100) and a trailing edge (114) of the rotor blade (100), comprising at least one shearing element (132), which extends between the pressure side and the suction side, the walls being formed by wall elements (126, 138) of a wood material, **characterized in that** in the outer side there is arranged in at least one of the walls at least one depression (134), in which a stiffening element (136) that extends in the direction of the span (116) of the body (106) is arranged.

2. Rotor blade according to Claim 1, **characterized in that** the wood material is solid wood, cross-laminated timber or veneer plywood.

3. Rotor blade according to Claim 1 or 2, **characterized in that** the wall elements (126) are at least partially adhesively bonded to one another.

4. Rotor blade according to one of Claims 1 to 3, **characterized in that** the stiffening element (136) is a spar cap.

5. Rotor blade according to Claim 4, **characterized in that** the spar cap comprises a carbon-fibre composite material, and/or **in that** the spar cap is adhesively embedded in the depression (134).

6. Rotor blade according to one of Claims 1 to 5, **characterized in that** the outer side of the wall is provided with a coating (120).

7. Rotor blade according to one of Claims 1 to 6, **characterized in that** the shearing element is configured as a web (122, 132), which extends between the leading edge (112) and the trailing edge (114) and/or which extends between the walls in the direction of the span (116) of the body (106).

8. Rotor blade according to one of Claims 1 to 7, **characterized in** at least some of the wall elements (126, 138) are configured as board-like elements that are connected to one another on their wide side.

9. Rotor blade according to one of Claims 1 to 8, **characterized in that** the trailing edge (114) of the rotor blade is formed from panel-like wall elements (138) .

10. Rotor blade according to Claim 9, **characterized in that** the panel-like wall elements (138) are connected to one another on their narrow side (140).

11. Rotor blade according to one of Claims 1 to 10, **characterized in that** the wall elements (126, 138) are pre-contoured before assembly.

12. Method for producing a rotor blade for a wind turbine in which a blade blank (124) is produced from wall elements (126, 138) of a wood material, an outer surface (130) of the blade blank (124) is brought into the form of the rotor blade by means of surface machining, and the surface (130) of the rotor blade (100) is coated, a depression (134) into which a spar cap (136) is introduced in a further method step being introduced into the surface (130) of the rotor blade (100) when machining the blade blank (124).

13. Method according to Claim 12, **characterized in that** the wall elements (126, 138) are pre-contoured and/or are connected by an adhesive and/or by means of finger joints and/or scarf joints to form the blade blank (124) .

14. Method according to Claim 12 or 13, **characterized in that** the surface machining is performed in a material-removing manner, and/or **in that** the spar cap is adhesively fixed in the depression.

15. Method according to one of Claims 12 to 14, **characterized in that**, as the coating (120), the surface (130) is coated and/or a film is applied.

## Revendications

1. Pale de rotor pour une éolienne (10) comprenant un corps (106) sous la forme d'un corps creux, le corps creux (106) présentant une paroi en tant que côté pression (108) et une paroi en tant que côté aspiration (110), lesquelles s'étendent entre une arête avant (112) de la pale de rotor (100) et une arête arrière (114) de la pale de rotor (100), comprenant au moins un élément de cisaillement (132) qui s'étend entre le côté pression et le côté aspiration, les parois étant formées d'éléments de paroi (126, 138) constitués d'un matériau à base de bois, **caractérisée en ce qu'**au moins un renfoncement (134) est disposé dans le côté extérieur dans au moins l'une des parois, dans lequel renfoncement est disposé un élément de rigidification (136) qui s'étend dans la direction de l'envergure (116) du corps (106).

2. Pale de rotor selon la revendication 1, **caractérisée en ce que** le matériau à base de bois est du bois massif, du contrecollé ou du contreplaqué.

3. Pale de rotor selon la revendication 1 ou 2, **caractérisée en ce que** les éléments de paroi (126) sont au moins en partie collés les uns aux autres.

4. Pale de rotor selon l'une quelconque des revendications 1 à 3, **caractérisée en ce que** l'élément de rigidification (136) est une sangle.

5. Pale de rotor selon la revendication 4, **caractérisée en ce que** la sangle présente un matériau composite en fibres de carbone et/ou **en ce que** la sangle est collée dans le renfoncement (134) .

6. Pale de rotor selon l'une quelconque des revendications 1 à 5, **caractérisée en ce que** le côté extérieur de la paroi est pourvu d'un revêtement (120).

7. Pale de rotor selon l'une quelconque des revendications 1 à 6, **caractérisée en ce que** l'élément de cisaillement est réalisé sous forme de nervure (122, 132) qui s'étend entre l'arête avant (112) et l'arête arrière (114) et/ou qui s'étend entre les parois dans la direction de l'envergure (116) du corps (106).

8. Pale de rotor selon l'une quelconque des revendications 1 à 7, **caractérisée en ce qu'**au moins une partie des éléments de paroi (126, 138) sont réalisés sous forme d'éléments de type planches qui sont connectés les uns aux autres au niveau de leur grand côté.

9. Pale de rotor selon l'une quelconque des revendications 1 à 8, **caractérisée en ce que** l'arête arrière (114) de la pale de rotor est formée d'éléments de paroi en forme de plaques (138).

10. Pale de rotor selon la revendication 9, **caractérisée en ce que** les éléments de paroi en forme de plaques (138) sont connectés les uns aux autres au niveau de leur petit côté (140).

11. Pale de rotor selon l'une quelconque des revendications 1 à 10, **caractérisée en ce que** les éléments de paroi (126, 138) sont pré-profilés avant l'assemblage.

12. Procédé de fabrication d'une pale de rotor pour une éolienne, dans lequel une ébauche d'aile (124) est fabriquée à partir d'éléments de paroi (126, 138) en matériau à base de bois, une surface extérieure (130) de l'ébauche d'aile (124) est amenée à la forme de la pale de rotor au moyen d'un usinage de surface et la surface (130) de la pale de rotor (100) est revêtue, un renfoncement (134) étant pratiqué dans la surface (130) de la pale de rotor (100) lors de l'usinage de l'ébauche d'aile (124), dans lequel renfoncement est introduite une sangle (136) dans une étape de procédé supplémentaire.

13. Procédé selon la revendication 12, **caractérisé en ce que** les éléments de paroi (126, 138) sont pré-profilés et/ou sont connectés avec un adhésif et/ou au moyen d'entures et/ou de tiges pour former l'ébauche d'aile (124).

14. Procédé selon la revendication 12 ou 13, **caractérisé en ce que** l'usinage de surface s'effectue par enlèvement de copeaux et/ou **en ce que** la sangle est collée dans le renfoncement.

15. Procédé selon l'une quelconque des revendications 12 à 14, **caractérisé en ce que** pour le revêtement (120), la surface (130) est vernie et/ou un film est appliqué.
